# EUROPÄISCHE PATENTSCHRIFT

(11) **EP 2 292 105 B1**
(45) Veröffentlichungstag und Bekanntmachung des Hinweises auf die Patenterteilung: **23.01.2013**
(21) Anmeldenummer: 10006589.5
(22) Anmeldetag: 24.06.2010
(51) Int. Cl.: A23L 1/30, A23L 1/302, A23L 1/304, A23L 2/52, A23L 1/03

(54) **Diätetikum**
Dietetic product
Agent diététique

(30) Priorität: 08.09.2009 DE 102009040571
(43) Veröffentlichungstag der Anmeldung: 09.03.2011
(73) Patentinhaber: Waldeck, Evelyn, 86946 Vilgertshofen (DE)
(72) Erfinder: Waldeck, Edmund, 24619 Rendswühren (DE)
(74) Vertreter: Zeitler - Volpert - Kandlbinder

(56) Entgegenhaltungen:
- EP-A1- 0 790 004
- EP-A2- 0 482 530
- DE-A1- 4 032 730
- DE-C1- 4 132 296

## Beschreibung

Die Erfindung bezieht sich auf ein Diätetikum, insbesondere enzymatisches Stoffwechselprodukt, als vegetabile Masse nach dem Oberbegriff des Patentanspruchs 1.

Ein derartiges Diätetikum ist aus der DE 41 32 296 bekannt.

Ferner ist in der DE 40 32 730 A1 ein enzymatisches Stoffwechselprodukt aus darmresistenten Lacto- und Bifido-Bakterien zur Gewinnung hochkonzentrierter L-(+)- Milchsäure und Fermentation einer vegetabilen Masse zur Endversorgung der Zellen und deren Sauerstoff-Utilisation, bestehend aus der vegetabilen Masse, Zutaten und Vitaminen offenbart, bei welchem die vegetabile Masse sich zusammensetzt aus wenigstens einigen der folgenden Vegetabil- und Vitalstoffen:
Mineraltiefbrunnen, Süßmolke-Konzentrat, Blütenpollen, Wildblütenhonig, Waldhonig, Sauerkraut, Brennnessel, Löwenzahn und Wurzeln/Blätter/Blüten des schmalblättrigen Sonnenhuts, rote Bete, Heidelbeeren, Cassis und Karotten, wobei die Zutaten bestehen aus Kalium, Calcium, Calcium Orthophosphat, Eisen, Vitamin dl-E-acetat, B1, B2, B6, Niacin und Ascorbinsäure, und wobei der Anteil der Vitamine etwa dem halben Deckungsbedarf pro Tag, die Gesamtmilchsäure ca. 5%/100 ml und der pH-Wert 2,9 - 3,4 betragen.

Der Erfindung liegt die Aufgabe zugrunde, ein Diätetikum der eingangs erwähnten Art zu schaffen, dessen Wirksamkeit weiter verbessert ist.

Diese Aufgabe wird erfindungsgemäß durch ein Diätetikum mit den Merkmalen des Patentanspruchs 1 gelöst.

Vorteilhafte Weiterbildungen sind Gegenstand der Unteransprüche.

Neben Rote Beete, Brennnessel, Löwenzahn, Sonnenhut, Blütenpollen, Honig, Möhren, Heidelbeeren, schwarze Johannisbeeren, Sauerkraut, Süßmolke, Kaliumgluconat, Eisengluconat, Vitamine B₁, B₂, B₆, C, E, Nicotinsäure, Bifidobakterien, Lactobakterien, Milchsäure, Tiefbrunnenwasser enthält das erfindungsgemäße Diätetikum organische Mineralien in Form von Sangokoralle und ferner Grapefruitextrakt. Außerdem sind die Lactobakterien in Form des Typs Acidophilus und in Form des Typs Helveticus ausgebildet. Erfindungsgemäß sind also anorganische Mineralien, wie zum Beispiel Magnesium und Calcium, durch die organischen Mineralien der Sangokoralle ersetzt. Dies trägt zusammen mit der Zugabe des Grapefruitextraktes und der Ausbildung der Lactobakterien in Form der beiden zuvor genannten Typen zu einer beträchtlichen Stabilisierung der Milchsäurebakterien bei, wodurch die Überlebensfahigkeit der Bakterien optimiert ist. Letztlich führt dies zu einer verbesserten Wirksamkeit des erfindungsgemäßen Diätetikums, da die Stoffwechseltätigkeit angeregt und die Darmtatigkeit verbessert ist.

Vorteilhafterweise sind der vegetabilen Masse Rote Beete, Heidelbeeren, schwarze Johannisbeeren, Süßmolke in Pulverform, von der Brennnessel, dem Löwenzahn und dem Sonnenhut nur die Blätter und Wurzeln und Sauerkraut in Form von Sauerkrautsaft und Vitamin C in Form von Ascorbinsäure zugegeben worden. Diese Merkmale tragen mit zur Steigerung der Leistungsfähigkeit im Sinne einer verbesserten Wirksamkeit des erfindungsgemäßen Diätetikums bei

Gemäß einer anderen Weiterbildung der Erfindung beträgt der Gesamtmilchsäuregehalt 4,0 Gew.-% und der pH-Wert 3,5. Bei dieser Weiterbildung ist die Überlebensfähigkeit der Bakterien im Diätetikum weiter stabilisiert, so dass ein derartiges Produkt mit zur Herstellung eines adäquaten, physiologischen Milieus des menschlichen Dickdarms geeignet ist. Ein Diätetikum gemäß dieser Weiterbildung ermöglicht auch eine Reanimierung der Säure bildenden Darmflora bzw. eine Neuansiedlung dieser Floren und bewirkt eine verbesserte Therapie, die als Symbiosesteuerung bezeichnet wird.

Gemäß einer anderen Weiterbildung der Erfindung ist das erfindungsgemäße Diätetikum durch folgende Konzentrat-Zusammensetzung gekennzeichnet:

| | | |
|---|---|---|
| Rote Beete | | 0,5 bis 3 Gew.%, vorzugsweise 1,0 Gew.-%, |
| Brennnessel | Blätter | 0,04 bis 0,12 Gew.%, vorzugsweise 0,08 Gew.-% |
| | Wurzeln | 0,02 bis 0,08 Gew.%, vorzugsweise 0,04 Gew.-% |
| Lowenzahn | Blätter | 0,04 bis 0,12 Gew.%, vorzugsweise 0,08 Gew.% |
| | Wurzeln | 0,02 bis 0,08 Gew.%, vorzugsweise 0,04 Gew.-% |
| Sonnenhut | Blätter | 0,04 bis 0,12 Gew.%, vorzugsweise 0,08 Gew.-% |
| | Wurzeln | 0,02 bis 0,08 Gew.%, vorzugsweise 0,04 Gew.-% |
| Blütenpollen | | 0,2 bis 0,8 Gew.%, vorzugsweise 0,40 Gew.-% |
| Wildblütenhonig | | 1 bis 4 Gew.%, vorzugsweise 3 Gew.-% |
| Möhren | | 0,02 bis 0,08 Gew.%, vorzugsweise 0,04 Gew.-% |
| Heidelbeeren | | 0,02 bis 0,08 Gew.%, vorzugsweise 0,04 Gew.-% |

| | | |
|---|---|---|
| Schwarze Johannisbeeren | | 0,02 bis 0,08 Gew %, vorzugsweise 0,04 Gew.-% |
| Sauerkraut | | 1 bis 2,2 Gew %, vorzugsweise 1,6 Gew.-% |
| Süßmolke | | 2 bis 8 Gew.%, vorzugsweise 4 Gew.-% |
| Kaliumgluconat | | 0,5 bis 3 Gew.-%, vorzugsweise 1 Gew.-% |
| Sangokoralle | | 0,4 bis 1,2 Gew.%, vorzugsweise 0,8 Gew.-% |
| Eisengluconat | | 0,1 bis 0,4 Gew.%, vorzugsweise 0,2 Gew.-% |
| Vitamin B₁ | | 0,003 bis 0,007 Gew.%, vorzugsweise 0,005 Gew.-% |
| Vitamin B₂ | | 0,003 bis 0,007 Gew.%, vorzugsweise 0,005 Gew.-% |
| Vitamin B₆ | | 0,005 bis 0,009 Gew.-%, vorzugsweise 0,007 Gew.-% |
| Vitamin C | | 0,14 bis 0,25 Gew.%, vorzugsweise 0,178 Gew.-% |
| Vitamin E | | 0,03 bis 0,1 Gew.%, vorzugsweise 0,067 Gew.-% |
| Nicotinsaure | | 0,02 bis 0,06 Gew -%, vorzugsweise 0,040 Gew.-% |
| Grapefruitextrakt | | 0,01 bis 0,03 Gew %, vorzugsweise 0,01 Gew.-% |
| Bifidobakterien | | 0,08 bis 0,16 Gew.%, vorzugsweise 0,12 Gew -% |
| Lactobakterien | | |
| | Acidophilus | 0,08 bis 0,16 Gew.%, vorzugsweise 0,12 Gew.-% |
| | Helveticus | 0,08 bis 0,16 Gew.%, vorzugsweise 0,12 Gew-% |
| Milchsäure | | 1 bis 3 Gew.-%, vorzugsweise 2 Gew.-% |
| Rest Tiefbrunnenwasser | | |

Bei dieser Weiterbildung handelt es sich, wie oben erwähnt, um ein Konzentrat. Besonders vorteilhaft ist, dass oben angegebene Mengen für Brennnessel, Löwenzahn, Sonnenhut, Blütenpollen, Honig, Möhren, Heidelbeeren und schwarze Johannisbeeren etwa um den Faktor 10 geringer sind als diejenigen Mengen, welche für diese genannten Bestandteile in dem vorerwähnten deutschen Patent 41 32 296 angegeben sind und die Wirksamkeit des erfindungsgemäßen Diätetikums trotz dieser Reduzierung bzw. gerade dadurch gesteigert werden konnte.

Gemäß einer anderen vorteilhaften Weiterbildung enthält eine trinkfertige Zusammensetzung 40 Gew.-% der Konzentrat-Zusammensetzung, 4 Gew.-% Heidelbeerkonzentrat, 4 Gew.-% Holunderkonzentrat, Honig und als Rest Tiefbrunnenwasser. Ein Diätetikum gemäß der letztgenannten Weiterbildung ist also gebrauchsfertig und kann sofort eingenommen werden.

Gemäß einer besonders bevorzugten Ausführungsform der Erfindung ist die vegetabile Masse zweifach, d.h. in einer ersten Fermentierungsphase und in einer zweiten Fermentierungsphase unter Zugabe weiterer Bakterienstämme, fermentiert worden. Durch diese Doppelfermentation erfährt das Produkt eine weitere Optimierung insofern, als neben der optimalen Aufschließung der Vitalstoffe diese Art der Fermentierung besonders zur Stabilisierung der Bakterienstämme beiträgt. Die Bakterienstämme bleiben also aktiv, was als das herausragende Qualitätsmerkmal bei dem erfindungsgemäßen Diätetikum anzusehen ist. Damit ist es möglich, eine Symbioselenkung effektiv durchzuführen. Bislang traten die Bakterienstämme nämlich nach der Reifungsphase in eine inaktive Phase über, um dann nach der Einnahme des Mittels von den körpereigenen Symbionten reaktiviert zu werden. Dieser Prozess der Reaktivierung ist jedoch nicht immer gewährleistet. Eine bestehende Dysbakterie in der Darmschleimhaut kann so ausgeprägt sein, dass eine Reaktivierung von ruhenden, inaktiven Bakterienstämmen nicht mehr möglich ist. Hier hilft das erfindungsgemäße Diätetikum weiter, indem aktive Bakterienstämme zugeführt werden, damit eine Symbioselenkung erfolgreich durchgeführt werden kann.

Gemäß einer weiteren, bevorzugten Ausführungsform der Erfindung ist die vegetabile Masse vor der ersten und vor der zweiten Fermentierungsphase in einer Desintegrationseinrichtung durch eine mechano-chemische Reaktion mittels rotierender Schlagelemente, vorzugsweise mittels zweier voreinander beabstandeter, gegensinnig rotierender Scheiben, mikrofein zerkleinert, dispergiert und aktiviert worden. Dieser zweifache Bearbeitungsvorgang der vegetabilen Masse in der Desintegrationseinrichtung ermöglicht eine optimale Stabilität der Bakterien sowie eine deutlich verbesserte Haltbarkeit des Produktes.

Ausführungsbeispiele des Erfindungsgegenstandes werden nachfolgend näher erläutert, wobei alle beschriebenen Merkmale für sich oder in beliebiger Kombination den Gegenstand der vorliegenden Erfindung unabhängig von ihrer Zusammenfassung in den Ansprüchen oder deren Rückbeziehung bilden.

Ein erfindungsgemäßes Diätetikum, insbesondere in Form eines enzymatischen Stoffwechselproduktes, enthält als vegetabile Masse in Form einer wässrigen Lösung neben Rote Beete, Brennnessel, Löwenzahn, Sonnenhut, Blütenpollen, Honig, Möhren, Heidelbeeren, schwarze Johannisbeeren, Sauerkraut, Süßmolke, Kaliumgluconat, Eisengluconat, Vitamine B₁, B₂, B₆, C, E, Nicotinsäure, Bifidobakterien, Lactobakterien, Milchsäure, Tiefbrunnenwasser ferner organische Mineralien in Form von Sangokoralle und außerdem Grapefruitextrakt, wobei die vorgenannten Lactobakterien in Form des Typs Acidophilus und in Form des Typs Helveticus ausgebildet sind.

Gemäß einer bevorzugten Ausführungsform der Erfindung sind der vegetabilen Masse Rote Beete, Heidelbeeren, schwarze Johannisbeeren, Süßmolke in Pulverform zugegeben worden. Der zum Einsatz kommende Honig ist gemäß einer besonders bevorzugten Ausführungsform der Erfindung Wildblütenhonig.

Gemäß einer anderen Ausführungsform der Erfindung sind der vegetabilen Masse von der Brennnessel, dem Löwenzahn und dem Sonnenhut nur die Blätter und Wurzeln zugegeben worden.

Gemäß einer weiteren Ausführungsform des erfindungsgemäßen Diätetikums sind der vegetabilen Masse Sauerkraut in Form von Sauerkrautsaft und Vitamin C in Form von Ascorbinsäure zugegeben worden.

Der Gesamtmilchsäuregehalt im fertigen Produkt beträgt 4,0 Gew.-% und der pH-Wert 3,5.

Das erfindungsgemäße Diätetikum liegt gemäß einer bevorzugten Ausführungsform in folgender Konzentrat-Zusammensetzung vor:

| | | |
|---|---|---|
| Rote Beete | | 0,5 bis 3 Gew.-%, vorzugsweise 1 Gew.%, |
| Brennnessel | Blätter | 0,04 bis 0,12 Gew.%, vorzugsweise 0,08 Gew.-% |
| | Wurzeln | 0,02 bis 0,08 Gew.%, vorzugsweise 0,04 Gew.-% |
| Löwenzahn | Blätter | 0,04 bis 0,12 Gew.%, vorzugsweise 0,08 Gew.-% |
| | Wurzeln | 0,02 bis 0,08 Gew.%, vorzugsweise 0,04 Gew -% |
| Sonnenhut | Blätter | 0,04 bis 0,12 Gew.%, vorzugsweise 0,08 Gew.-% |
| | Wurzeln | 0,02 bis 0,08 Gew.%, vorzugsweise 0,04 Gew.-% |
| Blütenpollen | | 0,2 bis 0,8 Gew.%, vorzugsweise 0,4 Gew.-% |
| Wildblütenhonig | | 1 bis 4 Gew.%, vorzugsweise 3 Gew.-% |
| Möhren | | 0,02 bis 0,08 Gew.-%, vorzugsweise 0,04 Gew -% |
| Heidelbeeren | | 0,02 bis 0,08 Gew.%, vorzugsweise 0,04 Gew -% |
| Schwarze Johannisbeeren | | 0,02 bis 0,08 Gew.-%, vorzugsweise 0,04 Gew -% |
| Sauerkraut | | 1 bis 2,2 Gew.-%, vorzugsweise 1,6 Gew.-% |
| Sußmolke | | 2 bis 8 Gew.-%, vorzugsweise 4 Gew.-% |
| Kaliumgluconat | | 0,5 bis 3 Gew.-%, vorzugsweise 1 Gew.-% |
| Sangokoralle | | 0,4 bis 1,2 Gew.-%, vorzugsweise 0,8 Gew.-% |
| Eisengluconat | | 0,1 bis 0,4 Gew.-%, vorzugsweise 0,2 Gew.-% |
| Vitamin B₁ | | 0,003 bis 0,007 Gew.-%, vorzugsweise 0,005 Gew.-% |
| Vitamin B₂ | | 0,003 bis 0,007 Gew -%, vorzugsweise 0,005 Gew -% |
| Vitamin B₆ | | 0,005 bis 0,009 Gew.-%, vorzugsweise 0,007 Gew.-% |
| Vitamin C | | 0,14 bis 0,25 Gew.-%, vorzugsweise 0,178 Gew.-% |
| Vitamin E | | 0,03 bis 0,1 Gew.-%, vorzugsweise 0,067 Gew.-% |
| Nicotinsäure | | 0,02 bis 0,06 Gew.-%, vorzugsweise 0,04 Gew.-% |
| Grapefruitextrakt | | 0,01 bis 0,03 Gew.-%, vorzugsweise 0,01 Gew.-% |
| Bifidobakterien | | 0,08 bis 0,16 Gew.-%, vorzugsweise 0,12 Gew.-% |
| Lactobakterien | | |
| | Acidophilus | 0,08 bis 0,16 Gew.-%, vorzugsweise 0,12 Gew.-% |
| | Helveticus | 0,08 bis 0,16 Gew.-%, vorzugsweise 0,12 Gew.-% |
| Milchsäure | | 1 bis 3 Gew.-%, vorzugsweise 2 Gew.-% |
| Tiefbrunnenwasser | | (Rest) |

Gemäß einer besonders bevorzugten Ausführungsform der Erfindung liegt das erfindungsgemäße Diätetikum in folgender trinkfertiger Zusammensetzung vor:
40 Gew.-% der vorgenannten Konzentrat-Zusammensetzung,
4 Gew.-% Heidelbeerkonzentrat,
4 Gew.-% Holunderkonzentrat,
Honig und
Rest Tiefbrunnenwasser.

Vitamin B₁ wird als Thiamin Hydrochlorid, Vitamin B₂ als Riboflavin und Vitamin B₆ als Phyridoxin Hydrochlorid der wässrigen Lösung zugegeben. Die Bifidobakterien sind vom Typ Spezies 420. Die Nicotinsaure liegt beispielsweise in Form des Nicotinsaureamids vor, mit dem sie auch als Niacin zusammengefasst wird. Der Grapefruitextrakt wird mit einer Konzentration von 42 Gew.-% Grapefruitkern zugegeben. Der Wert für das Grapefruitextrakt liegt bei 0,5 mg je 5 ml.

Gemäß einer anderen, besonders bevorzugten Ausführungsform der Erfindung ist die vegetabile Masse zweifach, d.h. in einer ersten Fermentierungsphase und in einer zweiten Fermentierungsphase unter Zugabe weiterer Bakterienstämme, fermentiert worden. Diese zweifache oder doppelte Fermentierung läuft derart ab, dass zunächst ein erster Fermentierungsprozess erfolgt, welcher etwa 3 bis 4 Tage andauert. Gegen Ende dieser ersten Fermentierungsphase erfolgt eine nochmalige Aktivierung der vegetabilen Masse mit neuen Bakterienstämmen in der vorerwähnten zweiten Fermentierungsphase. Die Dauer der zweiten Fermentierungsphase beträgt etwa 1 bis 2 Tage. Vor einer Zugabe der Bakterienstämme zu der Masse werden die Bakterienstämme mit Honig oder Melasse jeweils "angefüttert".

Gemäß noch einer weiteren, bevorzugten Ausführungsform der Erfindung ist die vegetabile Masse vor der ersten und vor der zweiten Fermentierungsphase in einer Desintegrationseinrichtung durch eine mechano-chemische Reaktion mittels rotierender Schlagelemente, vorzugsweise mittels zweier voneinander beabstandeter, gegensinnig rotierender Scheiben, mikrofein zerkleinert, dispergiert und aktiviert worden. Die rotierenden Scheiben sind mit kleinen Noppen versehen, mit deren Hilfe die vegetabile Masse zu einem äußerst fein zerkleinerten Endprodukt bearbeitet werden kann. Die vorzugsweise in Form der rotierenden Doppelscheiben ausgebildeten Schlagelemente drehen sich mit hoher Geschwindigkeit, vorzugsweise mit etwa 6000 U/min. Diese doppelte Desintegration ermöglicht eine optimale Stabilität der Bakterien sowie eine Steigerung der Haltbarkeit des erfindungsgemäßen Diätetikums.

Durch das Herstellungsverfahren mit der Desintegrationseinrichtung werden in der Relation zur voluminösen hydrophilen Phase ebenfalls relativ geringfügige Quantitäten an natürlichen Heilpflanzen und anderen Zutaten verwendet.

Während bei den homöopathischen Drogenauszügen die vom menschlichen Organismus benötigten wertvollen pflanzlichen Eiweiß- und Mineralienbausteine der Pflanzen nicht voll vorhanden sind, verbleiben diese Wirkstoffe durch die mikrofeine Dispersion der ganzen Pflanzen vollständig im enzymatischen Stoffwechselprodukt. Durch die Einwirkung der hohen Schlagzahl der rotierenden Schlagelemente und eines statischen oder dynamischen und/oder elektrischen Spannungsfeldes gelingt es erstmalig, trotz der quantitativ geringen vegetabilen Vitalstoffanteile deren Information (Botenstoffe) in eine hydrophile Phase zu integrieren, was mit bio-energetischen Messungen festgestellt werden konnte.

Bio-energetische Terrain-Vergleichsmessungen zwischen homöopathischen Arzneimitteln und dem hydrophilen enzymatischen Stoffwechselprodukt haben ein bis zu 180 bis 200 % höheres bio-energetisches Schwingungsfeld aufgezeigt.

In der Anwendungspraxis bedeutet ein höheres bio-energetisches Schwingungsfeld, wobei die im Massengemisch des enzymatischen Stoffwechselproduktes durch Beimpfung mit Kulturen erzeugte L-(+)-Milchsäure auch als Adapter tätig wird, eine spezifische optimale Resorption und Assimilation der bio-verfügbaren Information bzw. der Botenstoffe zur Stimulierung der teilweise blockierten oder fehlgesteuerten Regelsysteme zu regenerierenden Zellaktivitäten und Auslösung der Selbstheilungskräfte. Das Problem Alkohol ist nicht länger relevant.

Die Trägerphase der Information bzw. der Botenstoffe, nämlich das Tiefbrunnenwasser, so haben Messungen gezeigt, besitzt so gut wie kein bio-energetisches Terrain.

Erst durch das Herstellungsverfahren mittels der Desintegrationseinrichtung - also durch Dispersion und mechano-chemische Aktivierung - gelingt es, durch Einwirkung der rotierenden Schlagelemente mit entsprechend hoher Schlagzahl und eines statischen oder dynamischen und/oder elektrischen Spannungsfeldes ein bio-energetisches Terrain, ausgewiesen durch hohe bio-energetische Schwingungen im Tiefbrunnenwasser für immer zu integrieren.

Somit wird erfindungsgemäß ein enzymatisches Stoffwechselprodukt aus darmresidenten Lacto- und Bifido-Bakterien zur Gewinnung hochkonzentrierter L-(+)-Milchsäure zur Rückführung eines entgleisten Dickdarm-pH-Wertes in den Normbereich und Fermentation einer vegetabilen Masse zur Endversorgung der Zellen und deren Sauerstoff-Utilisation entwickelt, das sicherstellt, dass den Stoffwechselaktivitäten Gallensäure dekonjungierender Clostridienkeime und ammoniakgasbildender Fäulnisfloren durch das stoffwechseloptimale pH-Milieu entzogen wird, Entgiftungs-, Resorptions- und Stoffwechselfunktionen des Darms wieder in einem ausreichenden Maße erfüllt werden und die immunologischen Abläufe sowie die Selbstheilungskräfte aktiviert werden, so dass Obstipationen, colon irritabile, Völlegefühl, Gasbildung, Flatulenz und Müdigkeit sowie die durch diese Symptome erfolgende Auslösung stoffwechselabhängiger Zivilisationskrankheiten mit ihren gefürchteten Komplikationen vermieden werden.

Damit ist ein Diätetikum geschaffen, dessen Wirksamkeit weiter verbessert ist.

## Patentansprüche

1. Diätetikum, insbesondere enzymatisches Stoffwechselprodukt, als vegetabile Masse in Form einer wässrigen Lösung, enthaltend Rote Beete, Brennnessel, Löwenzahn, Sonnenhut, Blütenpollen, Honig, Möhren, Heidelbeeren, schwarze Johannisbeeren, Sauerkraut, Süßmolke, Kaliumgluconat, Eisengluconat, Vitamine B₁, B₂, B₆, C, E, Nicotinsäure, Bifidobakterien, Lactobakterien, Milchsäure, Tiefbrunnenwasser,
**dadurch gekennzeichnet, dass**
das Diätetikum organische Mineralien in Form von Sangokoralle und ferner Grapefruitextrakt enthält und die Lactobakterien in Form des Typs Acidophilus und in Form des Typs Helveticus ausgebildet sind.

2. Diätetikum nach Anspruch 1, **dadurch gekennzeichnet, dass** der vegetabilen Masse Rote Beete, Heidelbeeren, schwarze Johannisbeeren, Süßmolke in Pulverform zugegeben worden sind.

3. Diätetikum nach Anspruch 1 oder 2, **dadurch gekennzeichnet, dass** der vegetabilen Masse von der Brennnessel, dem Löwenzahn und dem Sonnenhut nur die Blätter und Wurzeln zugegeben worden sind.

4. Diätetikum nach einem der Ansprüche 1 bis 3, **dadurch gekennzeichnet, dass** der vegetabilen Masse Sauerkraut in Form von Sauerkrautsaft und Vitamin C in Form von Ascorbinsäure zugegeben worden sind.

5. Diätetikum nach einem der vorhergehenden Ansprüche, **dadurch gekennzeichnet, dass** der Gesamtmilchsäuregehalt 4,0 Gew.-% und der pH-Wert 3,5 beträgt.

6. Diätetikum nach einem der vorhergehenden Ansprüche, **gekennzeichnet durch** folgende Konzentrat-Zusammensetzung:
| | | |
|---|---|---|
| Rote Beete | | 0,5 bis 3 Gew -%, vorzugsweise 1 Gew -%, |
| Brennnessel | Blatter | 0,04 bis 0,12 Gew-%, vorzugsweise 0,08 Gew-% |
| | Wurzeln | 0,02 bis 0,08 Gew -%, vorzugsweise 0,04 Gew -% |
| Lowenzahn | Blätter | 0,04 bis 0,12 Gew-%, vorzugsweise 0,08 Gew-% |
| | Wurzeln | 0,02 bis 0,08 Gew -%, vorzugsweise 0,04 Gew -% |
| Sonnenhut | Blätter | 0,04 bis 0,12 Gew -%, vorzugsweise 0,08 Gew-% |
| | Wurzeln | 0,02 bis 0,08 Gew -%, vorzugsweise 0,04 Gew -% |
| Blütenpollen | | 0,2 bis 0,8 Gew.-%, vorzugsweise 0,4 Gew -% |
| Wildblutenhonig | | 1 bis 4 Gew -%, vorzugsweise 3 Gew -% |
| Möhren | | 0,02 bis 0,08 Gew -%, vorzugsweise 0,04 Gew -% |
| Heidelbeeren | | 0,02 bis 0,08 Gew -%, vorzugsweise 0,04 Gew -% |
| Schwarze Johannisbeeren | | 0,02 bis 0,08 Gew -%, vorzugsweise 0,04 Gew -% |
| Sauerkraut | | 1 bis 2,2 Gew.-%, vorzugsweise 1,6 Gew -% |
| Süßmolke | | 2 bis 8 Gew.-%, vorzugsweise 4 Gew -% |
| Kaliumgluconat | | 0,5 bis 3 Gew -%, vorzugsweise 1 Gew -% |
| Sangokoralle | | 0,4 bis 1,2 Gew -%, vorzugsweise 0,8 Gew -% |
| Eisengluconat | | 0,1 bis 0,4 Gew -%, vorzugsweise 0,2 Gew.-% |
| Vitamine B₁ | | 0,003 bis 0,007 Gew -%, vorzugsweise 0,005 Gew.-% |
| Vitamin B₂ | | 0,003 bis 0,007 Gew -%, vorzugsweise 0,005 Gew -% |
| Vitamin B₆ | | 0,005 bis 0,009 Gew -%, vorzugsweise 0,007 Gew -% |
| Vitamin C | | 0,14 bis 0,25 Gew -%, vorzugsweise 0,178 Gew -% |
| Vitamin E | | 0,03 bis 0,1 Gew -%, vorzugsweise 0,067 Gew -% |
| Nicotinsäure | | 0,02 bis 0,06 Gew.-%, vorzugsweise 0,04 Gew -% |
| Grapefruitextrakt | | 0,01 bis 0,03 Gew -%, vorzugsweise 0,01 Gew -% |
| Bifidobakterien | | 0,08 bis 0,16 Gew.-%, vorzugsweise 0,12 Gew -% |
| Lactobaktenen | | |
| Acidophilus | | 0,08 bis 0,16 Gew.%, vorzugsweise 0,12 Gew-% |
| Helveticus | | 0,08 bis 0,16 Gew -%, vorzugsweise 0,12 Gew -% |
| Milchsaure | | 1 bis 3 Gew -%, vorzugsweise 2 Gew -% |
| Tiefbrunnenwasser | | (Rest) |

7. Diätetikum nach Anspruch 6, **dadurch gekennzeichnet, dass** eine trinkfertige Zusammensetzung
40 Gew.-% der Konzentrat-Zusammensetzung,
4 Gew.-% Heidelbeerkonzentrat,
4 Gew.-% Holunderkonzentrat,
Honig und
Rest Tiefbrunnenwasser
enthält.

8. Diätetikum nach einem der vorhergehenden Ansprüche, **dadurch gekennzeichnet, dass** die vegetabile Masse zweifach, d.h. in einer ersten Fermentierungsphase und in einer zweiten Fermentierungsphase unter Zugabe weiterer Bakterienstämme, fermentiert worden ist.

9. Diätetikum nach Anspruch 8, **dadurch gekennzeichnet, dass** die vegetabile Masse vor der ersten und vor der zweiten Fermentierungsphase in einer Desintegrationseinrichtung durch eine mechano-chemische Reaktion mittels rotierender Schlagelemente, vorzugsweise mittels zweier voneinander beabstandeter, gegensinnig rotierender Scheiben, mikrofein zerkleinert, dispergiert und aktiviert worden ist.

## Claims

1. Dietetic product, in particular enzymatic metabolic product as a vegetable mass in the form of an aqueous solution, comprising
beetroot, stinging nettle, dandelion, Echinacea, blossom pollen, honey, carrots, blueberries, blackcurrants, sauerkraut, sweet whey, potassium gluconate, iron gluconate, vitamins B₁, B₂, B₆, C, E, nicotinic acid, Bifidobacteria, Lactobacteria, lactic acid, deep well water, **characterised in that** the dietetic product contains organic minerals which are configured in the form of sango corals and also grapefruit extract and the Lactobacteria in the form of the acidophilus type and in the form of the helveticus type.

2. Dietetic product according to claim 1, **characterised in that** beetroot, blueberries, blackcurrants, sweet whey in powdered form are added to the vegetable mass.

3. Dietetic product according to claim 1 or 2, **characterised in that** only the leaves and roots of dandelion and Echinacea are added to the vegetable mass.

4. Dietetic product according to one of the claims 1 to 3, **characterised in that** sauerkraut in the form of sauerkraut juice and vitamin C in the form of ascorbic acid are added to the vegetable mass.

5. Dietetic product according to one of the preceding claims, **characterised in that** the total lactic acid content is 4.0% by weight and the pH value is 3.5.

6. Dietetic product according to one of the preceding claims, **characterised by** the following concentrate composition:
| | | | |
|---|---|---|---|
| Beetroot | | | 0.5% to 3% by weight, preferably 1% by weight |
| Stinging nettle | | leaves | 0.04% to 0.12% by weight, preferably 0.08% by weight |
| | | roots | 0.02% to 0.08% by weight, preferably 0.04% by weight |
| Dandelion | | leaves | 0.04% to 0.12% by weight, preferably 0.08% by weight |
| | | roots | 0.02% to 0.08% by weight, preferably 0.04% by weight |
| Echninacea | | leaves | 0.04% to 0.12% by weight, preferably 0.08% by weight |
| | | roots | 0.02% to 0.08% by weight, preferably 0.04% by weight |
| Blossom pollen | | | 0.2% to 0.8% by weight, preferably 0.4% by weight |
| Wild blossom honey | | | 1 % to 4% by weight, preferably 3% by weight |
| Carrots | | | 0.02% to 0.08% by weight, preferably 0.04% by weight |
| Blueberries | | | 0.02% to 0.08% by weight, preferably 0.04% by weight |
| Blackcurrants | | | 0.02% to 0.08% by weight, preferably 0.04% by weight |
| Sauerkraut | | | 1 % to 2.2% by weight, preferably 1.6% by weight |
| Sweet whey | | | 2% to 8% by weight, preferably 4% by weight |
| Potassium gluconate | | | 0.5% to 3% by weight, preferably 1 % by weight |
| Sango coral | | | 0.4% to 1.2% by weight, preferably 0.8% by weight |
| Iron gluconate | | | 0.1 % to 0.4% by weight, preferably 0.2% by weight |
| Vitamin B₁ | | | 0.003% to 0.007% by weight, preferably 0.005% by weight |
| Vitamin B₂ | | | 0.003% to 0.007% by weight, preferably 0.005% by weight |
| Vitamin B₆ | | | 0.005% to 0.009% by weight, preferably 0.007% by weight |
| Vitamin C | | | 0.14% to 0.25% by weight, preferably 0.178% by weight |
| Vitamin E | | | 0.03% to 0.1% by weight, preferably 0.067% by weight |
| Nicotinic acid | | | 0.02% to 0.06% by weight, preferably 0.04% by weight |
| Grapefruit extract | | | 0.01% to 0.03% by weight, preferably 0.01 % by weight |
| Bifiobacteria | | | 0.08% to 0.16% by weight, preferably 0.12% by weight |
| Lactobacteria | | | |
| | acidophilus | | 0.08% to 0.16% by weight, preferably 0.12% by weight |
| | helveticus | | 0.08% to 0.16% by weight, preferably 0.12% by weight |
| Lactic acid | | | 1 % to 3% by weight, preferably 2% by weight |
| Deep well water | | | (Remainder) |

7. Dietetic product according to claim 6, **characterised in that** a ready-to-drink composition contains
40% by weight of the concentrate composition,
4% by weight of blueberry concentrate,
4% by weight of elderberry concentrate,
honey and
the remainder deep well water.

8. Dietetic product according to one of the preceding claims, **characterised in that** the vegetable mass is fermented twice, that is, in a first fermentation phase and, in a second fermentation phase with the addition of further bacterial strains.

9. Dietetic product according to claim 8, **characterised in that**, before the first fermentation phase and before the second fermentation phase, the vegetable mass is pulverised to a microfine size, dispersed and activated in a disintegration device by means of a mechanical-chemical reaction using rotating pulverising elements, preferably by means of two counter-rotating disks which are spaced apart from one another.

## Revendications

1. Agent diététique, en particulier produit du métabolisme enzymatique, en tant que masse à base de plantes sous forme de solution aqueuse, contenant
betteraves rouges, orties, pissenlit, rudbeckia, pollen de pétales, miel, carottes, myrtilles, cassis, choucroute, petit-lait doux, gluconate de potassium, gluconate de fer, vitamines B₁, B₂, B₆, C, E, acide nicotinique, bifidobactéries, lactobactéries, acide lactique, eau de puits profonds,
**caractérisé en ce que**
l'agent diététique contient des minéraux organiques sous forme de coraux Sango et en outre de l'extrait de pamplemousse, et **en ce que** les lactobactéries sont constituées sous la forme du type Acidophilus et sous la forme du type Helveticus.

2. Agent diététique selon la revendication 1, **caractérisé en ce que** des betteraves rouges, des cassis, des myrtilles, du petit-lait doux sont ajoutés sous forme de poudre à la masse à base de plantes.

3. Agent diététique selon la revendication 1 ou 2, **caractérisé en ce que** seulement les feuilles et les racines ont été ajoutées à la masse à base de plantes des orties, du pissenlit et du rudbeckia.

4. Agent diététique selon une des revendications 1 à 3, **caractérisé en ce que** de la choucroute sous forme de jus de choucroute et de la vitamine C sous forme d'acide ascorbique ont été ajoutées à la masse à base de plantes.

5. Agent diététique selon une des revendications précédentes, **caractérisé en ce que** la teneur totale en acide lactique est égale à 4,0 %-poids et le pH est égal à 3,5.

6. Agent diététique selon une des revendications précédentes, **caractérisé par** la composition de concentré suivante :
| | | | |
|---|---|---|---|
| Betteraves rouges | | | 0,5 à 3 %-poids, de préférence 1 %-poids |
| Orties | | Feuilles | 0,04 à 0,12 %-poids, de préférence 0,08 %-poids |
| | | Racines | 0,02 à 0,08 %-poids, de préférence 0,04 %-poids |
| Pissenlit | | Feuilles | 0,04 à 0,12 %-poids, de préférence 0,08 %-poids |
| | | Racines | 0,02 à 0,08 %-poids, de préférence 0,04 %-poids |
| Rudbeckia | | Feuilles | 0,04 à 0,12 %-poids, de préférence 0,08 %-poids |
| | | Racines | 0,02 à 0,08 %-poids, de préférence 0,04 %-poids |
| Pollen de pétales | | | 0,2 à 0,8 %-poids, de préférence 0,4 %-poids |
| Miel de pétales | | | 1 à 4 %-poids, de préférence 3 %-poids |
| sauvages | | | |
| Carottes | | | 0,02 à 0,08 %-poids, de préférence 0,04 %-poids |
| Myrtilles | | | 0,02 à 0,08 %-poids, de préférence 0,04 %-poids |
| Cassis | | | 0,02 à 0,08 %-poids, de préférence 0,04 %-poids |
| Choucroute | | | 1 à 2,2 %-poids, de préférence 1,6 %-poids |
| Petit-lait doux | | | 2 à 8 %-poids, de préférence 4 %-poids |
| Gluconate de | | | |
| potassium | | | 0,5 à 3 %-poids, de préférence 1 %-poids |
| Coraux Sango | | | 0,4 à 1,2 %-poids, de préférence 0,8 %-poids |
| Gluconate de fer | | | 0,1 à 0,4 %-poids, de préférence 0,2 %-poids |
| Vitamine B₁ | | | 0,003 à 0,007 %-poids, de préférence 0,005 %-poids |
| Vitamine B₂ | | | 0,003 à 0,007 %-poids, de préférence 0,005 %-poids |
| Vitamine B₆ | | | 0,005 à 0,009 %-poids, de préférence 0,007 %-poids |
| Vitamine C | | | 0,14 à 0,25 %-poids, de préférence 0,178 %-poids |
| Vitamine E | | | 0,03 à 0,1 %-poids, de préférence 0,067 %-poids |
| Acide nicotinique | | | 0,02 à 0,06 %-poids, de préférence 0,04 %-poids |
| Extrait de | | | |
| pamplemousse | | | 0,01 à 0,03 %-poids, de préférence 0,01 %-poids |
| Bifidobactéries | | | 0,008 à 0,16 %-poids, de préférence 0,12 %-poids |
| Lactobactéries | | | |
| | Acidophilus | | 0,08 à 0,16 %-poids, de préférence 0,12 %-poids |
| | Helveticus | | 0,08 à 0,16 %-poids, de préférence 0,12 %-poids |
| Acide lactique | | | 1 à 3 %-poids, de préférence 2 %-poids |
| Eau de puits | | | (reste) |
| profonds | | | |

7. Agent diététique selon la revendication 6, **caractérisé en ce qu'**une composition prête à boire contient
40 %-poids de la composition du concentré,
4 %-poids de concentré de myrtilles,
4 %-poids de concentré de sureau,
du miel et
le reste constitué d'eau de puits profond.

8. Agent diététique selon une des revendications précédentes, **caractérisé en ce que** la masse à base de plantes a été doublement fermentée, c'est-à-dire dans une première phase de fermentation et dans une deuxième phase de fermentation avec apport d'autres souches bactériennes.

9. Agent diététique selon la revendication 8, **caractérisé en ce que** la masse à base de plantes avant la première et avant la deuxième phase de fermentation a été broyée de façon microfine, dispersée et activée dans un équipement de désintégration par une réaction mécano-chimique au moyen d'éléments de percussion rotatifs, de préférence au moyen de deux disques éloignés l'un de l'autre et tournant en sens opposé.
